# EUROPEAN PATENT APPLICATION

(11) **EP 4 848 507 A1**
(43) Date of publication of application: **02.12.2026**
(21) Application number: 24920301.9
(22) Date of filing: 24.01.2024
(51) Int. Cl.: H02B 13/035

(54) **GAS-INSULATED SWITCHGEAR**

(71) Applicant: Mitsubishi Electric Corporation, Tokyo 100-8310 (JP)
(72) Inventor: MORI Takahiro, Tokyo 100-8310 (JP); MATSUNAGA Toshihiro, Tokyo 100-8310 (JP); KAGAWA Koichi, Tokyo 100-8310 (JP)
(74) Representative: Witte, Weller & Partner Patentanwälte mbB
(86) International application number: PCT/JP2024/002064
(87) International publication number: WO 2025/158578

(57) **Abstract**

A gas-insulated switchgear (100) includes a plurality of disconnector modules (10) and a circuit breaker module (30). The plurality of disconnector modules (10) are arranged with the center axes of the first pressure tanks (11A to 11C) parallel to each other. The first pressure tanks (11A to 11C) and the second pressure tank (11D) each have at least one second opening (11K2) in a side surface thereof. Between the disconnector modules (10) adjacent to each other and between the disconnector module (10) and the circuit breaker module (30) adjacent to each other, the second openings (11K2) are connected to each other to form one closed space (100R). Insulation gas is sealed in the closed space (100R).

## Description

### TECHNICAL FIELD

The present disclosure relates to a gas-insulated switchgear.

### BACKGROUND ART

A gas-insulated switchgear is such a switchgear that devices such as a circuit breaker and a disconnector are stored in a pressure tank filled with an insulation medium such as a highly insulating gas (e.g., sulfur hexafluoride (SF6)). In the gas-insulated switchgear, owing to high insulation performance of the insulation medium, the devices are formed in compact sizes, thus contributing to reduction in the space needed for installation. For example, as shown in Patent Document 1, a plurality of devices are stored in a cubic pressure tank, to reduce the installation area.

### CITATION LIST

### PATENT DOCUMENT

Patent Document 1: WO2016/157495

### SUMMARY OF THE INVENTION

### PROBLEM TO BE SOLVED BY THE INVENTION

However, in a case where the insulation medium sealed in the pressure tank is changed to the one having a low GWP (Global Warming Potential), in general, the value of the GWP and insulation performance are inversely proportional to each other, and therefore it is necessary to extend insulation distances for internal devices and main circuit conductors, resulting in increase in the volume of the pressure tank.

Along with this, the outer shape of the gas-insulated switchgear is also expanded, thus causing constraints in the installation-possible place. By increasing the sealing pressure of the insulation medium, insulation performance can be maintained without extending insulation distances. However, in the configuration of the cubic pressure tank as shown in Patent Document 1, in order to suppress deformation of the pressure tank due to increase in the internal pressure, it is necessary to take measures such as increasing the thickness of steel plates forming the pressure tank or adding reinforcement, leading to increase in the manufacturing cost of the gas-insulated switchgear.

The present disclosure has been made to solve the above problems, and an object of the present disclosure is to provide, at low cost, a gas-insulated switchgear that enables reduction in the installation area even if the sealing pressure of the insulation medium is increased.

### MEANS TO SOLVE THE PROBLEM

A gas-insulated switchgear according to the present disclosure includes: a plurality of disconnector modules; and a circuit breaker module. Each disconnector module includes a first pressure tank having a cylindrical shape and having a first opening at one end in a center axis direction of the first pressure tank, the first opening being closed by a lid, and a disconnector which is provided in the first pressure tank and opens/closes a main circuit in the center axis direction of the first pressure tank. The circuit breaker module includes a second pressure tank having a cylindrical shape and having a third opening at least at one end in a center axis direction of the second pressure tank, the third opening being closed by a lid, and a circuit breaker which is provided in the second pressure tank and interrupts a main circuit in the center axis direction of the second pressure tank. The plurality of disconnector modules are arranged with the center axes of the first pressure tanks parallel to each other. The first pressure tanks and the second pressure tank each have at least one second opening in a side surface thereof. Between the disconnector modules adjacent to each other and between the disconnector module and the circuit breaker module adjacent to each other, the second openings are connected to each other so that all the first pressure tanks and the second pressure tank form one closed space. Insulation gas is sealed in the closed space.

### EFFECT OF THE INVENTION

The gas-insulated switchgear according to the present disclosure makes it possible to provide a gas-insulated switchgear having a small size at low cost with a reduced installation area even if the sealing pressure of the insulation medium is increased.

### BRIEF DESCRIPTION OF THE DRAWINGS

[FIG. 1] FIG. 1 is a front view of a gas-insulated switchgear according to embodiment 1.
[FIG. 2] FIG. 2 is a schematic see-through view showing a configuration of a disconnector module according to embodiment 1.
[FIG. 3] FIG. 3 is a schematic see-through view showing a configuration of the disconnector module according to embodiment 1.
[FIG. 4] FIG. 4 is a top see-through view of the gas-insulated switchgear according to embodiment 1.
[FIG. 5] FIG. 5 is a schematic see-through view of a circuit breaker module according to embodiment 1 as seen in the direction of arrow B in FIG. 4.
[FIG. 6] FIG. 6 is a single-line wire connection diagram of the gas-insulated switchgear according to embodiment 1.
[FIG. 7] FIG. 7 is a schematic see-through view showing a configuration of a disconnector module according to embodiment 2.
[FIG. 8] FIG. 8 is a schematic see-through view showing a configuration of a disconnector module according to embodiment 3.
[FIG. 9] FIG. 9 is a schematic see-through view showing a configuration of a disconnector module according to embodiment 4.

### DESCRIPTION OF EMBODIMENTS

### Embodiment 1

Hereinafter, a gas-insulated switchgear according to embodiment 1 will be described with reference to the drawings.

In the drawings, the same reference characters denote the same or corresponding parts.

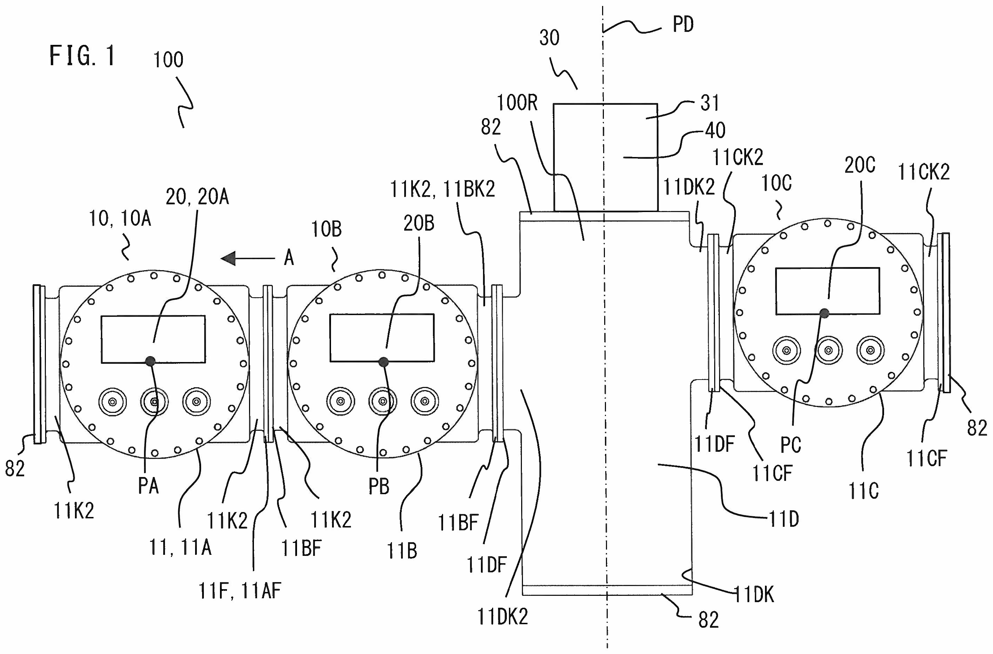

FIG. 1 is a front view of a gas-insulated switchgear 100 according to embodiment 1.

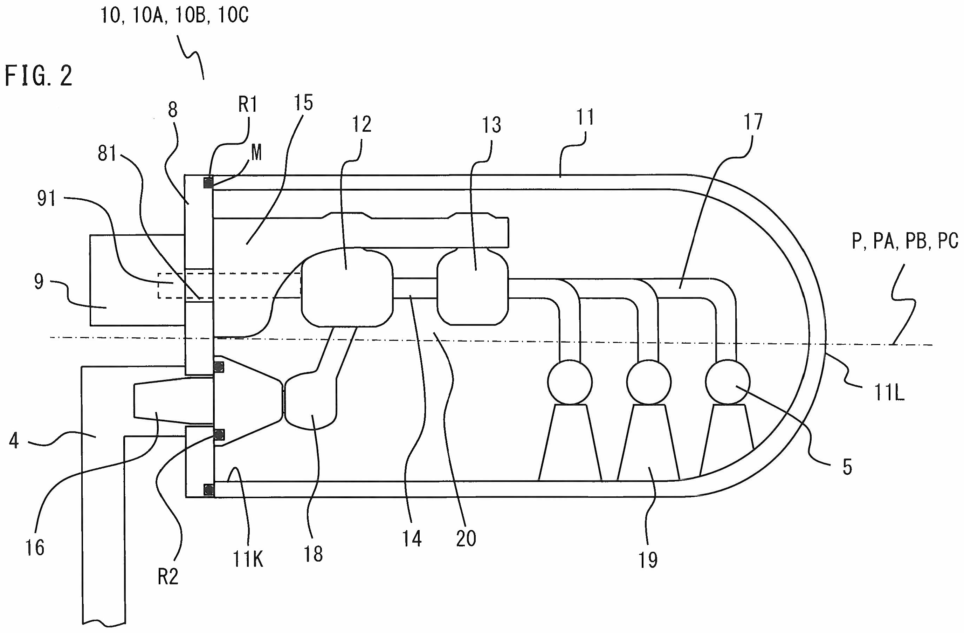

FIG. 2 is a schematic see-through view showing a configuration of a disconnector module 10 (10A). FIG. 2 is a schematic see-through view when the disconnector module 10 in FIG. 1 is seen in the direction of arrow A. FIG. 2 shows a state in which the main circuit is closed.

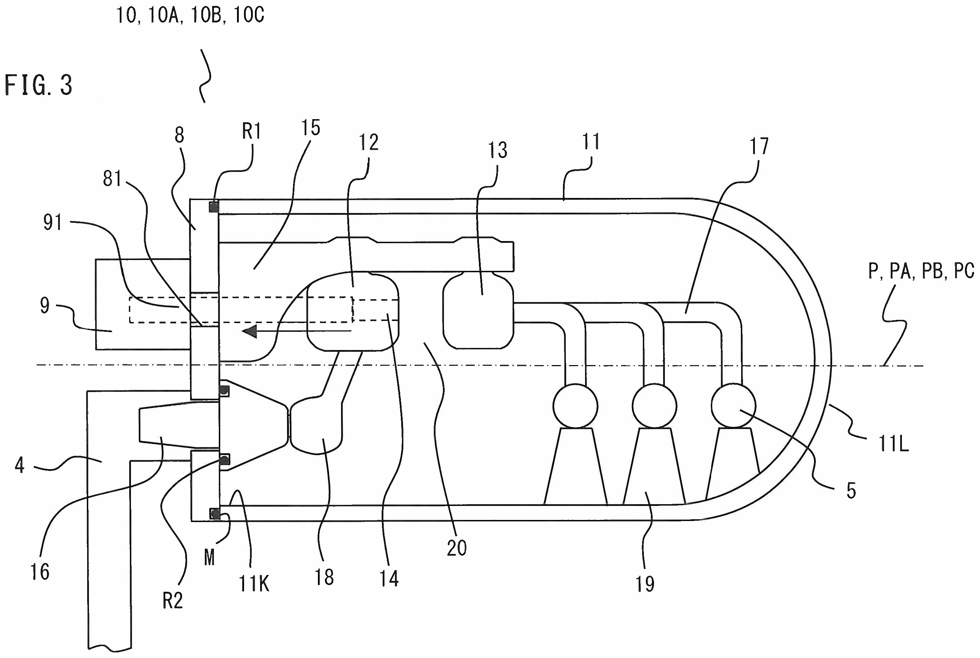

FIG. 3 is a schematic see-through view showing a configuration of the disconnector module 10. FIG. 3 is a schematic see-through view when the disconnector module 10 in FIG. 1 is seen in the direction of arrow A. FIG. 3 shows a state in which the main circuit is opened.

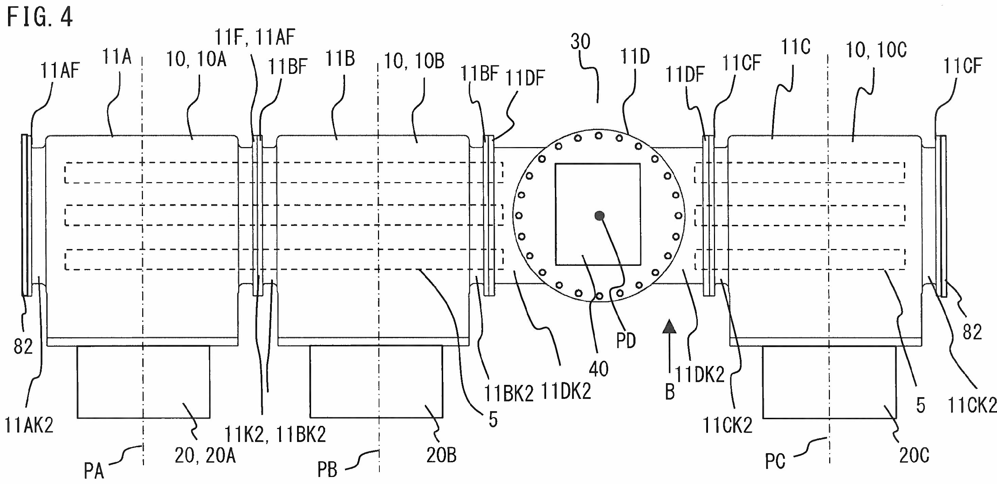

FIG. 4 is a top see-through view of the gas-insulated switchgear 100.

As shown in FIG. 1, the gas-insulated switchgear 100 is composed of three disconnector modules 10 and one circuit breaker module 30.

Hereinafter, when the three disconnector modules 10 are mentioned individually, they are referred to as disconnector modules 10A, 10B, and 10C. The configurations of the disconnector modules 10A, 10B, and 10C are the same. Although the configurations of the disconnector modules 10A, 10B, and 10C are the same, a power supply is connected to the disconnector module 10C and therefore the direction of electric energy flowing in the disconnector module 10C is opposite to those in the disconnector modules 10A and 10B. Reference characters of other components with "A" put thereto denote components of the disconnector module 10A. Similarly, reference characters of other components with "B" put thereto denote components of the disconnector module 10B, and reference characters of other components with "C" put thereto denote components of the disconnector module 10C.

Each disconnector module 10 is composed of a pressure tank 11 and one disconnector 20 stored inside the pressure tank 11. The disconnector modules 10A, 10B, and 10C and the circuit breaker module 30 are continuously connected.

The pressure tanks 11A, 11B, and 11C (first pressure tanks) are arranged with their center axes PA, PB, and PC parallel and horizontal to each other, and each have an opening 11K (first opening) shown in FIG. 2, at one end (the near/front side of the drawing sheet in FIG. 1) in the directions of the center axes PA, PB, and PC. One disconnector 20A, 20B, 20C is attached inside each of the pressure tanks 11A, 11B, and 11C, as described above. Although the example in which the center axes PA, PB, and PC of the pressure tanks 11A, 11B, and 11C are horizontal to each other is shown, they may not necessarily be horizontal.

The pressure tank 11D (second pressure tank) is arranged with its center axis PD vertical, and has openings 11DK (third openings) at upper and lower ends. That is, the pressure tank 11D is arranged with its center axis PD perpendicular to the center axes PA, PB, and PC of the pressure tanks 11A, 11B, and 11C. Although the example in which the center axis PD of the pressure tank 11D is perpendicular to the center axes PA, PB, and PC of the pressure tanks 11A, 10B, and 10C is shown, the center axis PD may not necessarily be perpendicular.

One circuit breaker 40 is attached inside the pressure tank 11D. The circuit breaker 40 interrupts large current flowing through the main circuit, in the direction of the center axis PD of the pressure tank 11D. The opening may be provided at only one side. The openings 11DK are closed by lids 82.

As shown in FIG. 2, an end on the opposite side in the direction of the center axis P from the opening 11K of the pressure tank 11 has a wall 11L having a curved-surface shape. A lid 8 is attached to the opening 11K via an O ring R1. The O ring R1 is stored in a groove M formed along an outer circumferential edge of the lid 8. Thus, the inside of the pressure tank 11 is kept in an airtight state against the outside.

The disconnector 20 includes a disconnector operation mechanism 9, a drive shaft 91, a cable-side conductor 12, a conductor blade 14, a busbar-side conductor 13, a bushing 16, an input/output conductor 18, and an insulation support portion 15.

The disconnector operation mechanism 9 for opening/closing the disconnector 20 is fastened to a surface of the lid 8 on the outer side of the pressure tank 11, and the disconnector operation mechanism 9 provided outside the pressure tank 11 and the conductor blade 14 which serves as an ON-OFF driving portion for the main circuit of the disconnector 20 in the pressure tank 11 are connected via the drive shaft 91 passing through the lid 8. Between the drive shaft 91 and the lid 8, airtightness is kept at a lid through portion 81.

At a surface of the lid 8 on the inner side of the pressure tank 11, the cable-side conductor 12 of the disconnector 20, the busbar-side conductor 13 of the disconnector, and the conductor blade 14 which connects between main circuit parts by the disconnector operation mechanism 9, are supported via the insulation support portion 15.

As shown in FIG. 2 and FIG. 3, the bushing 16 for connection of a cable terminal 4 is attached at a lower part of the lid 8 while being kept in an airtight state by an O ring R2, and the bushing 16 is connected to the cable-side conductor 12 via the input/output conductor 18. The cable terminal 4 is connected to a part of the bushing 16 on the outer side of the pressure tank 11. In FIG. 2 and FIG. 3, the cable-side conductor 12, the busbar-side conductor 13, the drive shaft 91, the conductor blade 14, the bushing 16, and the input/output conductor 18 are each shown as one part. However, they are arranged as three sets, i.e., for three phases, from the near side to the deep side of the drawing sheet in FIG. 2 and FIG. 3, and three drive shafts 91 are driven by one disconnector operation mechanism 9, whereby main circuits for three phases can be disconnected (opened/closed) in the direction of the center axis P of the pressure tank 11.

As shown in FIG. 1 and FIG. 2, when the pressure tank 11 is seen through in the direction of arrow A in FIG. 1, at the bottom on the wall 11L side at the back of the pressure tank 11, three insulators 19 are arranged in the direction of the center axis P (PA) toward the wall 11L at the back of the pressure tank 11. In actuality, the three insulators 19 are arranged side by side so as to be shifted from each other in the horizontal direction.

Three busbar conductors 5 are respectively supported by the insulators 19 from the lower side and are arranged side by side horizontally and in a direction perpendicular to the center axis of the pressure tank 11. That is, the busbar conductors 5 extend horizontally from the near side toward the deep side of the drawing sheet in FIG. 2 and are arranged in parallel to each other as shown in FIG. 4. As shown in FIG. 2 and FIG. 3, the three busbar conductors 5 and the three busbar-side conductors 13 are respectively connected via the main circuit conductors 17.

As shown in FIG. 4, flange portions 11F (11AF, 11BF, 11CF, 11DF) for fastening, which have flange openings 11K2 (11AK2, 11BK2, 11CK2, 11DK2), are provided on both side surfaces of the pressure tank 11. A lid 82 is fastened to one flange portion 11AF of the pressure tank 11A so that flange portion 11AF is closed with the inside of the pressure tank 11 kept in an airtight state. The other flange portion 11AF is fastened to one flange portion 11BF of the adjacent pressure tank 11B by bolts so that the disconnector modules 10A and 10B are joined to each other.

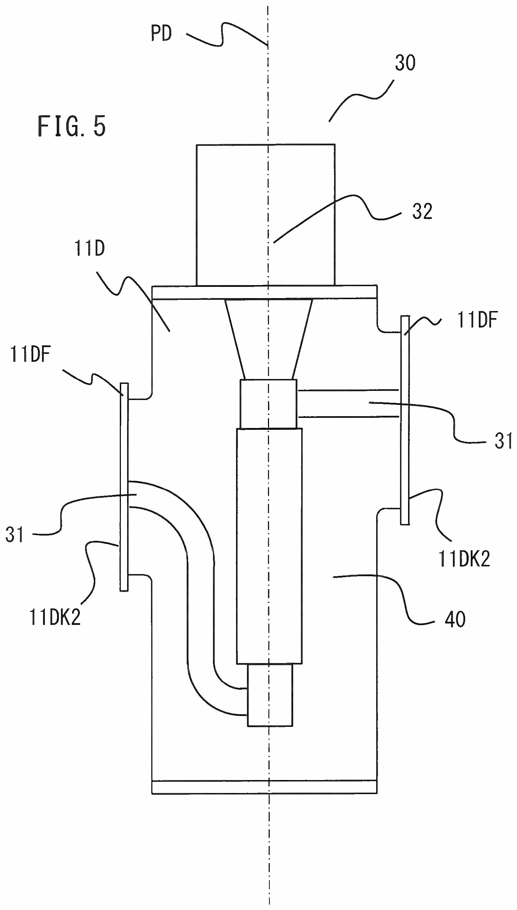

FIG. 5 is a schematic see-through view of the circuit breaker module 30 as seen in the direction of arrow B in FIG. 4.

As shown in FIG. 5, the flange portions 11DF for fastening, which have flange openings 11DK2, are provided on both side surfaces of the pressure tank 11D of the circuit breaker module 30. As shown in FIG. 1, one flange portion 11DF is fastened to the other flange portion 11BF having the flange opening 11BK2 of the adjacent pressure tank 11B by bolts, so that the disconnector module 10B and the circuit breaker module 30 are connected to each other. In FIG. 1, an operation portion 32 of the circuit breaker module 30 is provided on the upper side, but may be provided on the lower side.

As shown in FIG. 1, the other flange portion 11DF is fastened to the flange portion 11CF having one flange opening 11CK2 of the adjacent pressure tank 11C by bolts, so that the disconnector module 10B and the circuit breaker module 30 are connected to each other. A lid 82 is fastened to the flange portion 11CF having the other flange opening 11CK2 of the pressure tank 11C so that the flange opening 11CK2 is closed with the inside of the pressure tank 11 kept in an airtight state. Regarding the pressure tank 11D, the positions of the two flange portions 11DF are shifted from each other in the direction of the center axis PD, in relation to arrangement of the circuit breaker 40.

As described above, the gas-insulated switchgear 100 has such a structure that arbitrary numbers of disconnector modules 10 and circuit breaker modules 30 can be selected and continuously connected. The reason why the circuit breaker module is placed perpendicularly to the ground is to enhance efficiency in installation space. The actual length of the circuit breaker module 30 is greater than the length of the disconnector module 10. Therefore, the circuit breaker module 30 is erected so as to reduce the entire installation space.

As shown in FIG. 5, one busbar connection conductor 31 passes through the flange opening 11DK2 of the pressure tank 11D and the flange opening 11BK2 of the pressure tank 11B and is connected to the busbar conductor 5 which passes through the disconnector module 10B and the disconnector module 10A. Another busbar connection conductor 31 passes through the flange opening 11DK2 of the pressure tank 11D and is connected to the busbar conductor 5 of the disconnector module 10C. In FIG. 5, left and right busbar connection conductors 31 are each shown as one part, but in actuality, at each of the left and the right, three busbar connection conductors 31 are arranged side by side toward the deep side of the drawing sheet.

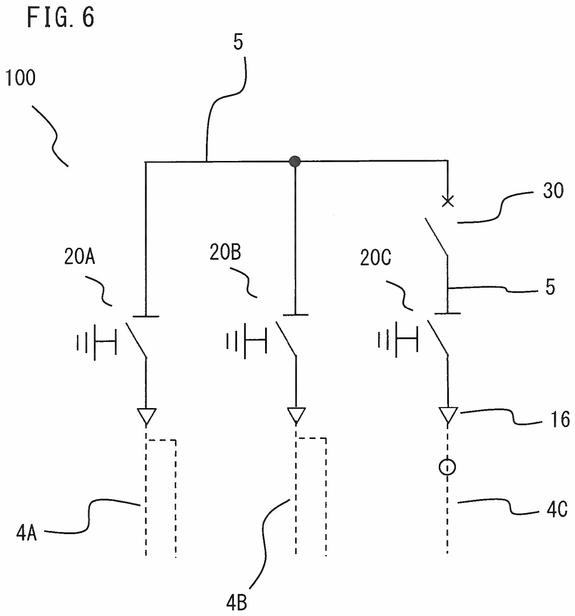

FIG. 6 is a single-line wire connection diagram of the gas-insulated switchgear 100.

Two circuits on the left side represent two disconnectors 20A and 20B, and a circuit at the right end represents the disconnector 20C and the circuit breaker 40. The modules are connected via the busbar conductor 5. A cable terminal 4A and a cable terminal 4B are each adaptable to double wire connection. In FIG. 6, a cable terminal 4C is a side connected to a power supply.

The flange openings 11K2 and 11DK2 of the disconnector modules 10 and the circuit breaker module 30 of the gas-insulated switchgear 100 shown in FIG. 1 are each connected with the lid 8 or the adjacent flange portion 11F so that airtightness is ensured. Thus, the inside of the gas-insulated switchgear 100 is one closed space 100R kept in an airtight state against the outside. All conductors composing the disconnector 20, the circuit breaker 40, and the main circuit provided inside the pressure tanks 11A to 11D are insulated by sealing an insulation medium such as sulfur hexafluoride (SF6) gas or dry air in a pressurized state in each pressure tank 11A to 11D.

As shown in FIG. 1, the disconnector 20 or the circuit breaker 40 is stored one by one in the pressure tank 11 having a cylindrical shape, and each opening of the pressure tank 11 is connected with the lid 8 having a plate thickness equal to or greater than the plate thickness of the pressure tank 11, or the flange portions 11AF to 11DF are connected to each other, whereby they are firmly fixed to each other against the internal pressure from the insulation medium pressurized and sealed inside the pressure tank 11, thus ensuring airtightness inside the gas-insulated switchgear 100.

For example, as compared to a case where the box-shaped pressure tank shown in Patent Document 1 is manufactured with a stainless steel material having a plate thickness of about 6 mm, manufacturing the pressure tank 11 of the present embodiment using aluminum with a thickness of about 20 mm by casting is likely to achieve pressure-proof performance that is ten times higher. That is, it becomes possible to use the gas-insulated switchgear 100 with the sealing pressure of the insulation medium increased, without greatly increasing the outer dimensions of the pressure tank 11 in order to ensure insulation distances for components. Therefore, it newly becomes possible to use, as an insulation medium, dry air which has low global warming potential but cannot exhibit insulation performance unless the sealing pressure is increased. In addition, since the plate thickness of the pressure tank 11 can be reduced, the manufacturing cost of the gas-insulated switchgear 100 can be reduced.

The gas-insulated switchgear according to embodiment 1 is a gas-insulated switchgear including: a plurality of disconnector modules; and a circuit breaker module. Each disconnector module includes a first pressure tank having a cylindrical shape and having a first opening at one end in a center axis direction of the first pressure tank, the first opening being closed by a lid, and a disconnector which is provided in the first pressure tank and opens/closes a main circuit in the center axis direction of the first pressure tank. The circuit breaker module includes a second pressure tank having a cylindrical shape and having a third opening at least at one end in a center axis direction of the second pressure tank, the third opening being closed by a lid, and a circuit breaker which is provided in the second pressure tank and interrupts a main circuit in the center axis direction of the second pressure tank. The plurality of disconnector modules are arranged with the center axes of the first pressure tanks parallel to each other. The first pressure tanks and the second pressure tank each have at least one second opening in a side surface thereof. Between the disconnector modules adjacent to each other and between the disconnector module and the circuit breaker module adjacent to each other, the second openings are connected to each other so that all the first pressure tanks and the second pressure tank form one closed space. Insulation gas is sealed in the closed space.

Thus, it becomes possible to provide a gas-insulated switchgear having a small size at low cost with a reduced installation area even if the sealing pressure of the insulation medium is increased.

The plurality of disconnector modules include a plurality of busbar conductors extending through the second openings perpendicularly to the center axes of the first pressure tanks.

Thus, the gas-insulated switchgear that is highly extensible can be provided.

The plurality of busbar conductors are arranged in parallel to each other and horizontally to each other.

Thus, the gas-insulated switchgear that is adaptable to various device configurations can be provided merely by arranging the disconnector modules side by side and joining them.

The plurality of busbar conductors are supported from a lower side by insulators provided at a bottom of the first pressure tank. Thus, the gas-insulated switchgear that is highly stable can be provided.

The first pressure tank and the second pressure tank each have a flange portion at the second opening thereof, and the flange portions are joined to each other. Thus, a plurality of the disconnector modules and the circuit breaker module can be easily connected firmly to each other.

The plurality of disconnector modules are arranged with the center axes of the first pressure tanks horizontal to each other.

Thus, the gas-insulated switchgear that is highly stable in an installed state can be provided.

The circuit breaker module is arranged with the center axis thereof perpendicular to the center axis of the disconnector module.

Thus, the gas-insulated switchgear for which the installation space is small can be provided.

### Embodiment 2

Hereinafter, a gas-insulated switchgear 200 according to embodiment 2 will be described focusing on a difference from embodiment 1.

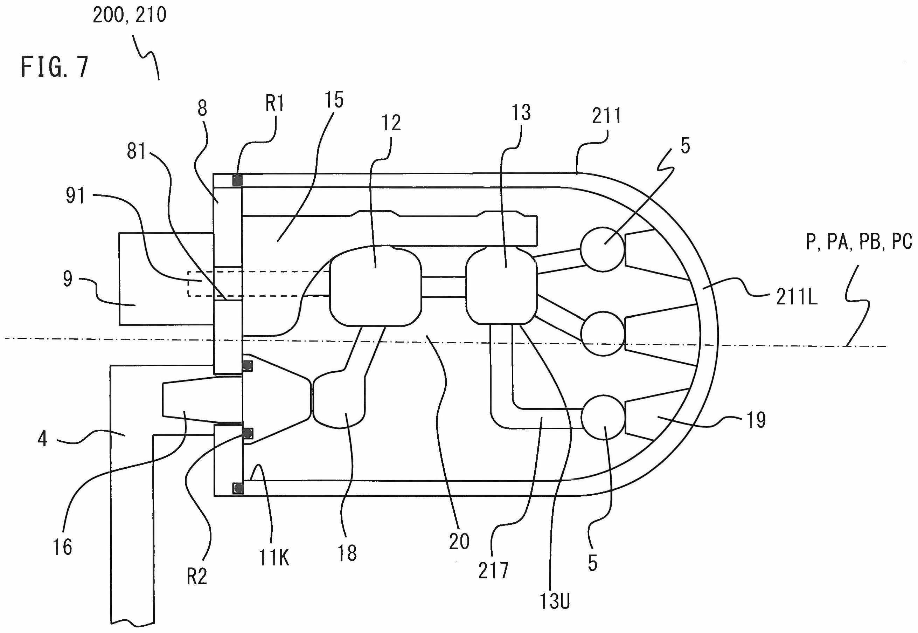

FIG. 7 is a schematic see-through view showing a configuration of a disconnector module 210. FIG. 7 is a schematic see-through view when the disconnector module 210 is seen in the same direction as in FIG. 2. FIG. 7 shows a state in which the main circuit is closed.

In embodiment 1, the insulators 19 provided in the pressure tank 11A are arranged in the direction of the center axis PA of the pressure tank 11A in FIG. 2. The three busbar conductors 5 are supported horizontally by the insulators 19 from the lower side.

In the present embodiment 2, three insulators 19 are provided on the inner side of a curved-surface-shaped wall 211L located on the backmost side of a pressure tank 211 and are arranged side by side in parallel to each other and perpendicularly to the ground.

Three busbar conductors 5 are supported by the respective insulators 19 from the lateral side, and arranged side by side in parallel to each other and perpendicularly to the ground. That is, the respective busbar conductors 5 extend in parallel to each other from the near side toward the deep side of the drawing sheet in FIG. 7. As shown in FIG. 7, the three busbar conductors 5 and three busbar-side conductors 13 are respectively connected by main circuit conductors 217.

The busbar-side conductors 13 have, also at a bottom surface 13U in addition to a back surface, parts to which the main circuit conductors 217 connected to the busbar conductors 5 are connected. In FIG. 7, two main circuit conductors 217 are connected to the back surfaces of the busbar-side conductors 13, and one main circuit conductor 217 is connected to the bottom surface 13U of the busbar-side conductor 13.

As shown in FIG. 7, the busbar conductors 5 are arranged side by side perpendicularly to the ground, whereby the dimensions in the center axis direction of the pressure tank 211 can be reduced within the range that can ensure insulation distances for the busbar conductors 5 and the insulators 19, thus contributing to reduction in dimensions needed for installation of the gas-insulated switchgear 200.

In the gas-insulated switchgear according to embodiment 2, the plurality of busbar conductors are arranged side by side in parallel to each other and perpendicularly to a ground.

Thus, the dimensions in the center axis direction of the pressure tanks can be reduced.

In the gas-insulated switchgear according to embodiment 2, the plurality of busbar conductors are supported from a lateral side by insulators provided at a wall on an opposite side in the center axis direction from the first opening of the first pressure tank.

Thus, the pressure tanks can be downsized while insulation distances are ensured.

In the gas-insulated switchgear according to embodiment 2, the disconnector module includes three said busbar conductors, three bushings via which the disconnectors are connected to an external device, and three main circuit conductors respectively connecting three busbar-side conductors of the disconnectors to the busbar conductors. The main circuit conductor of at least one of the three main circuit conductors is located at a bottom surface of the busbar-side conductor of the disconnector.

Thus, the dimensions of the pressure tanks can be further reduced.

### Embodiment 3

Hereinafter, a gas-insulated switchgear 300 according to embodiment 3 will be described focusing on a difference from embodiments 1 and 2.

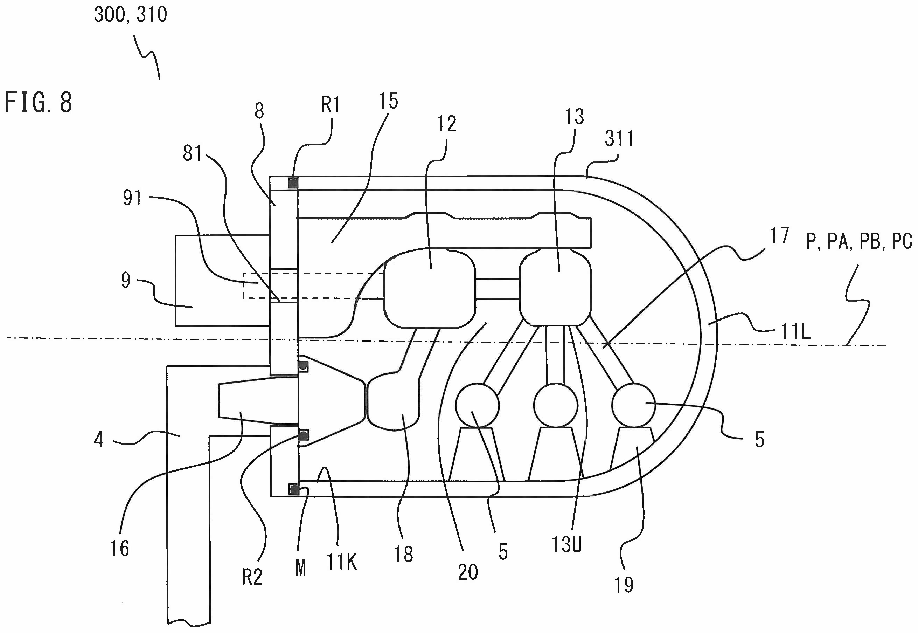

FIG. 8 is a schematic see-through view showing a configuration of a disconnector module 310. FIG. 8 is a schematic see-through view when the disconnector module 310 is seen in the same direction as in FIG. 2. FIG. 8 shows a state in which the main circuit is closed.

As shown in FIG. 8, a pressure tank 311 has such a structure that the busbar conductors 5 are located at the insulators 19 located directly under (or downward of) the busbar-side conductors 13, and bottom surfaces 13U of the busbar-side conductors 13 and the busbar conductors 5 are connected by the main circuit conductors 17, as compared to the pressure tanks 11 and 211 described in embodiments 1 and 2. The three busbar conductors 5 are supported by the insulators 19 from the lower side horizontally to each other and in parallel to each other.

As shown in FIG. 8, the busbar conductors 5 are accommodated in a space directly under the busbar-side conductors 13, which would not be occupied by any components in the circuit configuration in embodiment 1. Thus, within the range that can ensure insulation distances between the input/output conductors 18 and the busbar conductors 5, the depth dimension of the pressure tank 311 is reduced, whereby it becomes possible to further reduce the installation area as compared to embodiment 2. In addition, reduction in the volume of the pressure tank 211 contributes to reduction in the usage amount of the sealed insulation medium.

In the gas-insulated switchgear according to embodiment 3, the disconnector module includes three said busbar conductors, three bushings via which the disconnectors are connected to an external device, and three main circuit conductors respectively connecting three busbar-side conductors of the disconnectors to the busbar conductors. The three main circuit conductors are located downward of the busbar-side conductors of the disconnectors. The three busbar conductors are arranged in parallel to each other and horizontally to each other.

Thus, the pressure tanks can be downsized and the usage amount of the sealed insulation medium can be reduced.

### Embodiment 4

Hereinafter, a gas-insulated switchgear 400 according to embodiment 4 will be described focusing on a difference from embodiment 3.

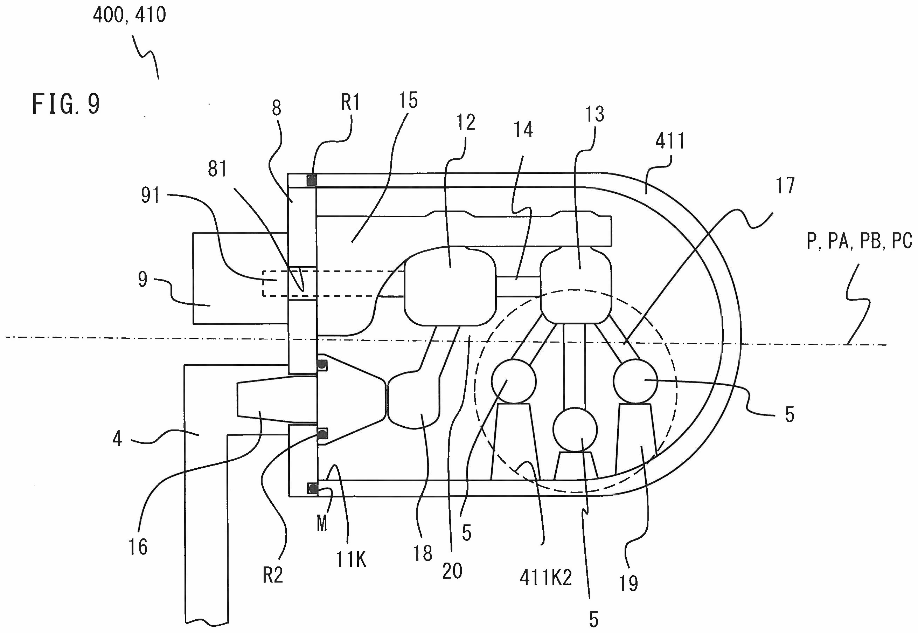

FIG. 9 is a schematic see-through view showing a configuration of a disconnector module 410. FIG. 9 is a schematic see-through view when the disconnector module 410 is seen in the same direction as in FIG. 2. FIG. 9 shows a state in which the main circuit is closed.

As shown in FIG. 9, in a pressure tank 411, as compared to the pressure tank 311 described in embodiment 3, the busbar conductors 5 located directly under (or downward of) the busbar-side conductors 13 are arranged such that the three conductors are located at the vertices of a triangle in the schematic see-through view in FIG. 9. That is, of the three busbar conductors 5, two busbar conductors 5 located on both outer sides are arranged horizontally to each other and one busbar conductor 5 located at the center is located below the other two busbar conductors 5. The bottom surfaces 13U of the busbar-side conductors 13 and the busbar conductors 5 are connected by the main circuit conductors 17.

With the above structure, the diameter of an opening 411K2 of a side surface of the pressure tank 411 is reduced within the range that can ensure the insulation distances between the three busbar conductors 5 and the insulation distance between each busbar conductor 5 and the pressure tank 411. In the shown example, the triangular arrangement of the busbar conductors 5 is such that only the busbar conductor 5 at the center in the direction of the center axis P is located on the lower side in the vertical direction. However, the triangular arrangement may be such that only the busbar conductor 5 at the center in the direction of the center axis P is located on the upper side in the vertical direction.

As shown in FIG. 9, when the busbar conductors 5 are arranged in a triangular form, the diameter of the opening 411K2 of the pressure tank 411 can be reduced as compared to embodiment 3, whereby it is possible to reduce stress applied to the flange portions which are connection portions of the modules due to the internal pressures of the disconnector module 410 and the circuit breaker module 30. Thus, the axial force needed for connecting the flange portions can be reduced, whereby the number and the size of bolts for fastening the modules can be reduced.

In the gas-insulated switchgear according to embodiment 4, the disconnector module includes three said busbar conductors, three bushings via which the disconnectors are connected to an external device, and three main circuit conductors respectively connecting three busbar-side conductors of the disconnectors to the busbar conductors. The three main circuit conductors are located downward of the busbar-side conductors of the disconnectors. The three busbar conductors are arranged in parallel to each other. Of the busbar conductors, two busbar conductors located on both outer sides are arranged horizontally to each other, and one busbar conductor located at a center is located at a higher or lower position than the other two busbar conductors.

Thus, the diameter of the opening of the pressure tank can be reduced, whereby components are reduced and the manufacturing cost of the gas-insulated switchgear can be reduced.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

100, 200, 300, 400 gas-insulated switchgear
10, 10A, 10B, 10C, 210, 310, 410 disconnector module
11, 11A, 11B, 11C, 11D, 211, 311, 411 pressure tank
11F, 11AF, 11BF, 11CF, 11DF flange portion
11K2, 11AK2, 11BK2, 11CK2, 11DK2 flange opening
11K, 11DK, 411K2 opening
11L, 211L wall
12 cable-side conductor
13 busbar-side conductor
14 conductor blade
15 insulation support portion
16 bushing
17, 217 main circuit conductor
18 input/output conductor
19 insulator
20, 20A, 20B, 20C disconnector
30 circuit breaker module
31 busbar connection conductor
32 operation portion
4, 4A, 4B, 4C cable terminal
40 circuit breaker
5 busbar conductor
8, 82 lid
81 lid through portion
9 disconnector operation mechanism
91 drive shaft
M groove
P, PA, PB, PC, PD center axis
R1, R2 O ring

## Claims

1. A gas-insulated switchgear comprising:
a plurality of disconnector modules; and
a circuit breaker module, wherein
each disconnector module includes
a first pressure tank having a cylindrical shape and having a first opening at one end in a center axis direction of the first pressure tank, the first opening being closed by a lid, and
a disconnector which is provided in the first pressure tank and opens/closes a main circuit in the center axis direction of the first pressure tank,
the circuit breaker module includes
a second pressure tank having a cylindrical shape and having a third opening at least at one end in a center axis direction of the second pressure tank, the third opening being closed by a lid, and
a circuit breaker which is provided in the second pressure tank and interrupts a main circuit in the center axis direction of the second pressure tank,
the plurality of disconnector modules are arranged with the center axes of the first pressure tanks parallel to each other,
the first pressure tanks and the second pressure tank each have at least one second opening in a side surface thereof,
between the disconnector modules adjacent to each other and between the disconnector module and the circuit breaker module adjacent to each other, the second openings are connected to each other so that all the first pressure tanks and the second pressure tank form one closed space, and
insulation gas is sealed in the closed space.

2. The gas-insulated switchgear according to claim 1, wherein
the plurality of disconnector modules include a plurality of busbar conductors extending through the second openings perpendicularly to the center axes of the first pressure tanks.

3. The gas-insulated switchgear according to claim 2, wherein
the plurality of busbar conductors are arranged in parallel to each other and horizontally to each other.

4. The gas-insulated switchgear according to claim 2, wherein
the plurality of busbar conductors are arranged side by side in parallel to each other and perpendicularly to a ground.

5. The gas-insulated switchgear according to claim 3, wherein
the plurality of busbar conductors are supported from a lower side by insulators provided at a bottom of the first pressure tank.

6. The gas-insulated switchgear according to claim 4, wherein
the plurality of busbar conductors are supported from a lateral side by insulators located at a wall on an opposite side in the center axis direction from the first opening of the first pressure tank.

7. The gas-insulated switchgear according to claim 2, wherein
the disconnector module includes
three said busbar conductors,
three bushings via which the disconnectors are connected to an external device, and
three main circuit conductors respectively connecting three busbar-side conductors of the disconnectors to the busbar conductors, and
at least one of the three main circuit conductors is located at a bottom surface of the busbar-side conductor of the disconnector.

8. The gas-insulated switchgear according to claim 2, wherein
the disconnector module includes
three said busbar conductors,
three bushings via which the disconnectors are connected to an external device, and
three main circuit conductors respectively connecting three busbar-side conductors of the disconnectors to the busbar conductors,
the three main circuit conductors are located downward of the busbar-side conductors of the disconnectors, and
the three busbar conductors are arranged in parallel to each other and horizontally to each other.

9. The gas-insulated switchgear according to claim 2, wherein
the disconnector module includes
three said busbar conductors,
three bushings via which the disconnectors are connected to an external device, and
three main circuit conductors respectively connecting three busbar-side conductors of the disconnectors to the busbar conductors,
the three main circuit conductors are located downward of the busbar-side conductors of the disconnectors, and
the three busbar conductors are arranged in parallel to each other, and
of the busbar conductors, two busbar conductors located on both outer sides are arranged horizontally to each other, and one busbar conductor located at a center is located at a higher or lower position than the other two busbar conductors.

10. The gas-insulated switchgear according to any one of claims 1 to 9, wherein
the first pressure tank and the second pressure tank each have a flange portion at the second opening thereof, and
the flange portions are joined to each other.

11. The gas-insulated switchgear according to any one of claims 1 to 10, wherein
the plurality of disconnector modules are arranged with the center axes of the first pressure tanks horizontal to each other.

12. The gas-insulated switchgear according to any one of claims 1 to 11, wherein
the circuit breaker module is arranged with the center axis thereof perpendicular to the center axis of the disconnector module.
